# EUROPEAN PATENT APPLICATION

(11) **EP 4 792 958 A1**
(43) Date of publication of application: **19.08.2026**
(21) Application number: 26156207.8
(22) Date of filing: 04.02.2026
(51) Int. Cl.: B22F 9/08, B22F 9/14, B33Y 70/00

(54) **ATOMIZATION ASSEMBLY**

(30) Priority: 14.02.2025 US 202519053982
(71) Applicant: AP&C Advanced Powders And Coatings Inc., Boisbriand, Québec J7H 1R8 (CA)
(72) Inventor: Balmayer, Matthieu, Saint-Eustache, QC CA J7R 0L5 (CA); Ouellet, Yannick, Saint-Eustache, QC CA J7R 0L5 (CA); Desrochers, Pierre-Alexandre, Saint-Eustache, QC CA J7R 0L5 (CA); Al Sayed, Chady, Saint-Eustache, QC CA J7R 0L5 (CA)
(74) Representative: Hafner & Kohl PartmbB

(57) **Abstract**

An atomization assembly (120, 200, 300) for heating a metal includes a copper crucible (122, 202) arranged to hold the metal, a copper nozzle (124, 204) extending beneath the copper crucible (122, 202), the copper nozzle (124, 204) defining a downstream end and an outer surface, an annular plate (302) defining an aperture (304), the aperture (304) disposed beneath the copper nozzle (124, 204), a cooling system (144, 308) in thermal communication with the annular plate (302), and an atomization fluid supply (158) oriented to direct an atomization gas into the aperture (304).

## Description

### FIELD

The present disclosure relates to an atomization assembly and a method for forming metal powder.

### BACKGROUND

Additive manufacturing processes generally involve the buildup of one or more materials to make a net or near net shape (NNS) object, in contrast to subtractive manufacturing methods. Though "additive manufacturing" is an industry standard term, additive manufacturing encompasses various manufacturing and prototyping techniques known under a variety of additive manufacturing terms, including freeform fabrication, 3D printing, rapid prototyping/tooling, etc. Additive manufacturing techniques are capable of fabricating complex components from a wide variety of materials. Generally, a freestanding object can be fabricated from a computer aided design (CAD) model.

One common type of powder bed additive manufacturing process, referred to as electron beam melting (EBM), produces three-dimensional (3D) objects by using an electron beam to sinter, melt, or otherwise fuse a fine powder. Laser sintering or melting is also a notable additive manufacturing process which uses a laser beam to selectively fuse various material systems, such as engineering plastics, thermoplastic elastomers, metals, ceramics, etc. During both EBM and laser sintering/melting processes, the powder to be melted is spread evenly over a powder bed on a build platform, and the energy beam sinters or melts a cross sectional layer of the object being built under control of an electronic control unit or an emission directing device. The build platform is lowered and another layer of powder is spread over the powder bed and object being built, followed by successive melting/sintering of the powder. The process is repeated until the part is completely built up from the melted/sintered powder material.

Regardless the type of powder bed additive manufacturing process, the physical and chemical characteristics of the additive powder can impact the quality of the resulting object. That is, the properties of a component built through additive manufacturing depends on the metal powder itself, with higher quality powders (e.g., denser, cleaner, and more spherical) behaving more predictably and thus resulting in better parts. As such, high quality powder material is required for components formed from additive manufacturing techniques, particularly when used to manufacture components for gas turbine machinery and/or medical implant or device applications.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic view of an exemplary system for forming a metal powder by atomization.
FIG. 2 is a schematic view of an assembly for melting a metal feedstock.
FIGS. 3A-3B are cross-sectional views of the assembly of FIG. 2.
FIG. 4 is a cross-sectional view of another assembly for melting a metal feedstock.
FIG. 5 is a view of the assembly of FIG. 4 in the direction indicated by the arrow 5.
FIG. 6 is a cross-sectional view of another assembly for melting a metal feedstock.
FIG. 7 is a block diagram of an example method for forming a metal powder.
FIG. 8 is a block diagram of another example method for forming a metal powder.
FIG. 9 is a chart illustrating exemplary energy conversion factors for an atomization assembly.
FIG. 10 is a chart illustrating exemplary energy conversion factors as a function of mass flowrate at specific surface temperatures.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first," "second," "third," and other ordinals are used to distinguish one component from another and are not intended to signify location or importance of the individual components.

As used herein, two components are "adjacent" to each other when they are in close proximity with no other structures, components, or layers in between.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The phrases "from X to Y" and "between X and Y" each refers to a range of values inclusive of the endpoints (i.e., refers to a range of values that includes both X and Y).

In this context, to "atomize" a metal is to form a powder of metal particles from a molten metal. That is, the atomized metal particles are not individual atoms of a pure metal or metal alloy, but particles of a size that may be used in additive manufacturing. In a gas atomization process, a stream of a gas (such as argon) is directed toward a stream of molten metal, which breaks the stream of molten metal into droplets that solidify into a powder of metal particles. Atomization for reactive powders is typically carried out with a gas stream. This gas stream can be delivered at different pressures and temperatures, such as high-pressure cold gas, hot gas supplied by a gas heater or a plasma torch. In a plasma atomization process, a stream of plasma breaks the stream of molten metal into droplets. The particles may have respective diameters from 0.001 µm to 150 µm.

In this context, a "metal" refers to a pure metal or a metal alloy (i.e., a compound of pure metals that may or may not include other non-oxygen elements), and not to a metal oxide such as a ceramic (such as aluminum oxide (alumina), silicon oxides, rust, or salts, among others) or to a metal salt, such as sodium chloride. Examples of metals include aluminum, titanium, copper, and alloys thereof. A "metal powder" is a powder including a plurality of metal particles that are predominantly formed of a pure metal or a metal alloy, such as a titanium powder consisting of particles of pure titanium. The metal powder may include trace amounts of interstitial elements (C, O, H, N) and other impurities or passivation layers.

The present disclosure is generally related to atomizing metals, particularly titanium and titanium alloys, into a metal powder. A gas atomization process can be used to recycle titanium to form titanium powder. Gas atomization atomizes a stream of molten metal using a consumable pouring nozzle and a relatively cool flow of gas that interacts with the stream of molten metal. Such consumable nozzles, formed of ceramic or refractory materials that react with titanium, deteriorate quickly, limiting the batch size and quality of titanium powder production. Further, the pouring nozzles must have a sufficiently large outlet to prevent clogging, reduce contamination of the molten metal (by reacting with the molten metal), limit overly quick deterioration of the pouring nozzle, or combinations thereof. In such a manner, it will be appreciated that it can be difficult to obtain a desirably fine powder using gas atomization processes, particularly when atomizing a metal, such as titanium or titanium alloys, with a relatively high melting point. Multiple attempts were made to realize cooled copper pouring nozzles, but none were able to scale down a nozzle to deliver small metal flow rates for powder atomization.

Additionally, or alternatively, a plasma atomization process may be used to atomize a metal to form a metal powder. Plasma atomization uses wires of titanium, rather than recycled powder, that are atomized with high-temperature gas from one or more plasma torches. The high-temperature plasma may simultaneously melt and atomize the metal to form the desired powder. However, particularly when atomizing a metal, such as titanium, with a relatively high melting point, it can be difficult to provide enough energy through the high-temperature plasma to produce desirably fine powder.

The inventors of the present disclosure sought out a means to facilitate a metal powder (e.g., titanium or titanium alloy powder) production that allowed for production of desirably fine powder sizes, and optionally the use of recycled feedstock, without overly contaminating the metal being atomized and consuming the main components of the atomization system. In particular, the inventors recognized that an atomization assembly with a copper crucible and a copper nozzle, in combination with an induction heater and cooling systems (each operable with both the copper crucible and copper nozzle), can be used in both gas atomization and plasma atomization processes to achieve these goals.

For example, the induction heater can heat feedstock of titanium in the copper crucible, allowing the use of recycled powder to be melted into a molten flow of metal for atomization. Copper does not significantly react with titanium, reducing or inhibiting contamination of the molten titanium. To maintain the molten titanium in a liquid state while inhibiting melting of the copper crucible and the copper nozzle, the cooling systems (such as a water-based cooling system) actively cool the copper crucible and the copper nozzle. The cooling system can further allow for the copper pouring nozzle to define a sufficiently small outlet such that the molten titanium is provided at a sufficiently low mass flowrate therethrough to allow for production of relatively fine metal powders. In particular, the thermal conductivity of copper allows for rapid cooling to maintain solidity of the copper crucible and the copper nozzle, even when the induction heater heats the molten titanium to temperatures well beyond the melting point of copper. Further, the induction heater extending to the copper pouring nozzle may prevent clogging of the pouring nozzle during operation and between operations, despite the relatively low mass flowrate of molten titanium through the relatively small outlet of the copper pouring nozzle.

In particular, the inventors discovered, unexpectedly, in the course of designing an atomization assembly having the above-noted structure, that the costs associated with inclusion of both the induction heater and cooling system, each operating at sufficiently high levels to melt the metal and cool the crucible/ nozzle, may be overcome by the benefits associated with the atomization assembly of the present disclosure (e.g., having a non-consumable copper nozzle, obtaining atomized powder with a sufficiently high percentage at a desirably fine size, etc.), contrary to previous thinking and expectations. In particular, the inventor discovered during the course of designing several atomization systems having the above-noted structure, a relationship exists among the mass flowrate of the molten metal through the outlet of the copper nozzle, a mass flowrate of a coolant through the copper nozzle provided by the cooling system, a maximum surface temperature of a copper surface in direct contact with the solidified molten metal, a maximum temperature of the molten metal through the outlet of the copper nozzle, whereby including the above-noted structure in accordance with one or more of the exemplary aspects described herein may result in a net benefit to the atomization system design.

With a goal of arriving at an improved atomization system capable of producing a metal powder (e.g., titanium) of desirably fine powder sizes, optionally allowing for the use of recycled feedstock, without contaminating the metal being atomized and consuming the main components of the atomization system, the inventors proceeded in the manner of designing atomization systems having the above-noted structure with various metal and coolant mass flowrates, maximum metal temperatures, maximum surface temperatures in the copper nozzle; checking an operability and powder characteristics achieved by the designed atomization system; redesigning the atomization system to vary the noted parameters based on the impact on other aspects of the atomization system; rechecking the operability and powder characteristics of the redesigned atomization system; etc. during the design of several different types of atomization systems, including the atomization systems described herein, which are described below in greater detail.

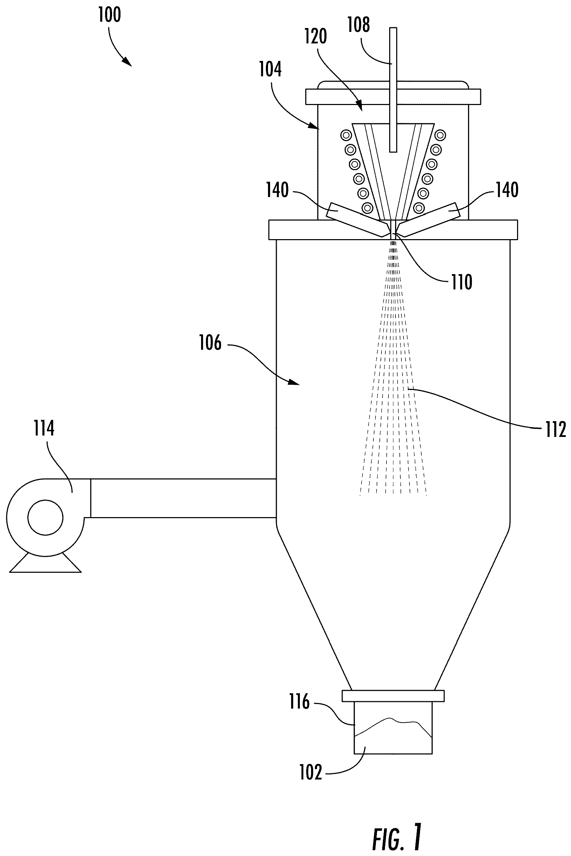

Referring now to the drawings, wherein identical numerals indicate the same elements throughout the figures, FIG. 1 is a schematic view of an exemplary system 100 for forming a metal powder 102 by atomization. The system 100 includes a melt chamber 104 and an atomization chamber 106. A metal feedstock 108, illustrated here in the form of a rod, melts into molten metal 110, and the molten metal 110 atomizes into droplets 112, which solidify in the atomization chamber 106 to form the metal powder 102.

The atomization chamber 106 includes a vacuum pump 114 and a powder collecting vessel 116. The vacuum pump 114 evacuates substantially all of the air from within the atomization chamber 106, reducing the oxygen contamination in the metal powder 102. After evacuation of the air, an inert gas (such as argon) is provided to the atomization chamber 106 to maintain a pressure differential between the melt chamber 104 and the atomization chamber 106. In such a form, the gas pressure in the melt chamber 104 is greater than the gas pressure in the atomization chamber 106. The pressure differential reduces or inhibits metal powder 102 formed in the atomization chamber 106 from returning to the melt chamber 104. The metal powder 102 sinks by gravity to the powder collecting vessel 116 for storage.

The melt chamber 104 includes an assembly 120 for melting the metal feedstock 108. The assembly 120 melts the metal feedstock 108 into a stream of molten metal 110 and atomizes the molten metal 110 into the droplets 112, which solidify in the atomization chamber 106 to form the metal powder 102.

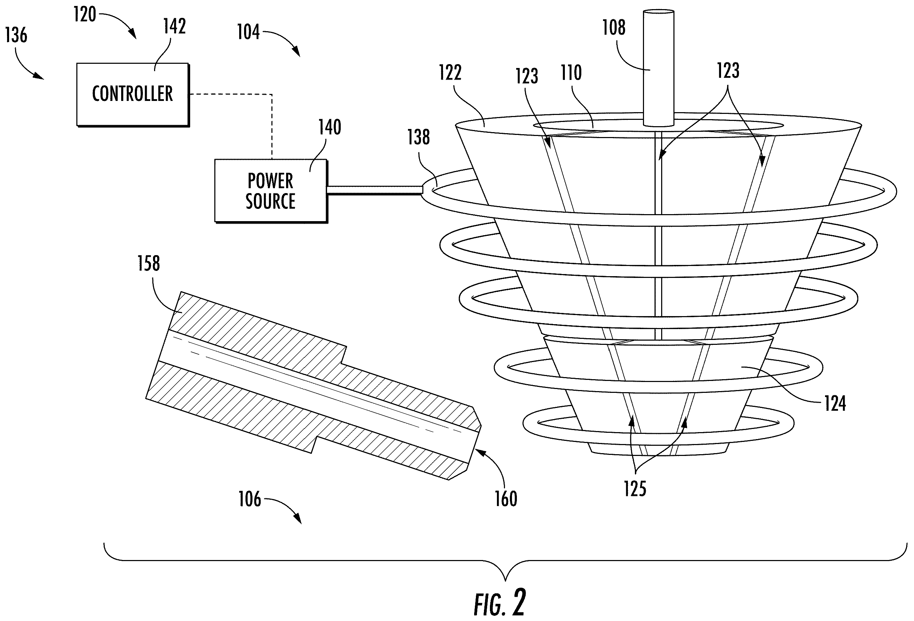

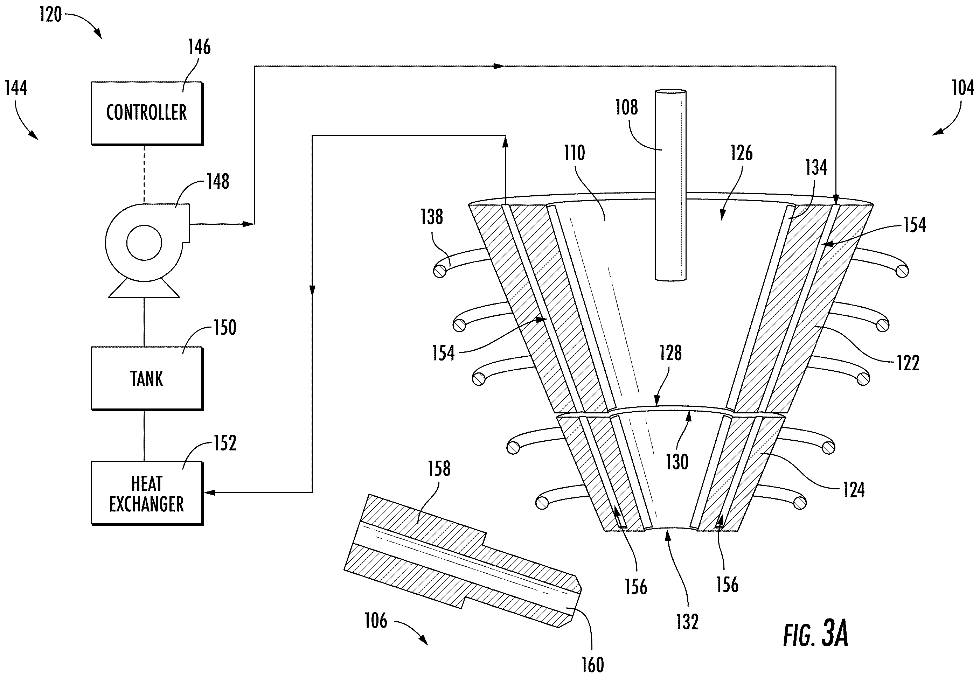

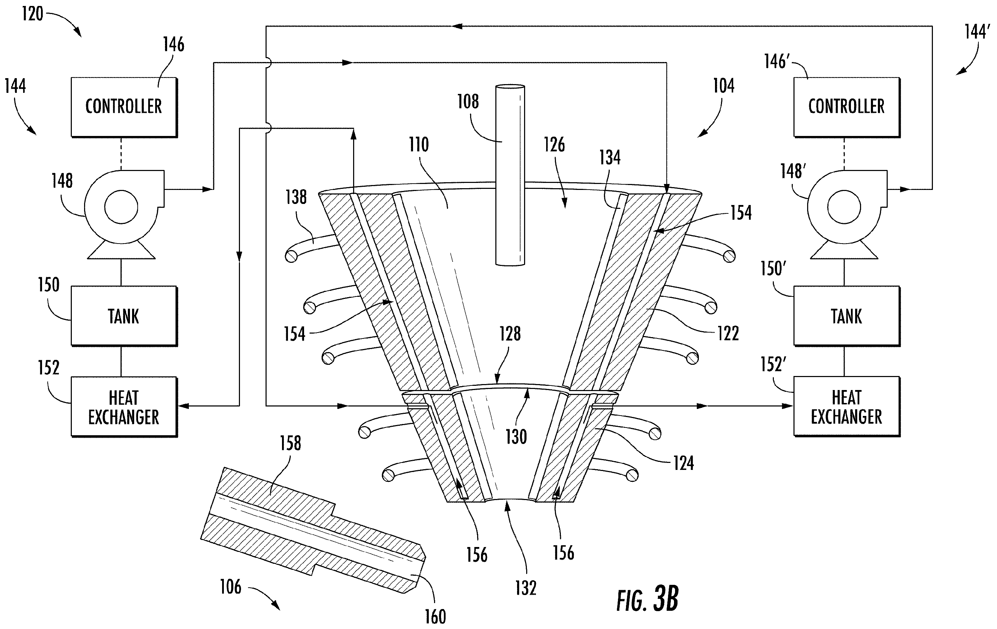

Now referring to FIGS. 2-3B, schematic views of the assembly 120 are shown. FIG. 2 shows a magnified view of the assembly 120. FIG. 3A shows a cross-sectional view of the assembly 120 with a water cooling system. FIG. 3B shows a cross-sectional view of the assembly 120 with two water cooling systems.

The assembly 120 includes a copper crucible 122 and a copper nozzle 124. The copper crucible 122 is arranged to hold the metal feedstock 108. The copper nozzle 124 is located beneath and adjacent to the copper crucible 122. The copper nozzle 124 and the copper crucible 122 may be separate components, as shown in FIG. 2. Alternatively, not shown in the FIGS., the copper crucible 122 and the copper nozzle 124 may be portions of a same component. In such a form, the "crucible" is a portion of the component having a diameter greater than a specified value, such as 0.75 inches, and the "nozzle" is a portion of the component having a diameter less than the specified value.

The copper nozzle 124 is adjacent to the copper crucible 122 and directs the flow of molten metal 110 downward. The copper crucible 122 and the copper nozzle 124 are disposed in the melt chamber 104 above the atomization chamber 106. The copper nozzle 124 controls the flowrate of the molten metal 110 by creating a choke point, and for the application of atomization, to deliver the molten metal 110 to a location of an atomization fluid supply, described in further detail below.

The copper crucible 122 and the copper nozzle 124 are specifically formed of pure copper or a copper alloy because copper can be cooled to maintain solidity of the copper crucible 122 and the copper nozzle 124 while the metal feedstock 108 is melted to the molten metal 110. In this context, the nozzle and crucible are made out of materials with high electrical and thermal conductivity such as high purity copper (e.g., 99.9% copper) or copper alloys. The copper crucible 122 and the copper nozzle 124 may be formed of the same copper alloy. Alternatively, the copper crucible 122 and the copper nozzle 124 may be different copper alloys, different concentrations of copper, or combinations thereof. The copper crucible 122 and the copper nozzle 124 may be additively manufactured to improve respective geometries of specific features.

The copper crucible 122 defines one or more insulation slots 123, and the copper nozzle 124 defines one or more insulation slots 125. The insulation slots 123, 125 are defined in respective outer surfaces of the copper crucible 122 and the copper nozzle 124 may be fitted with an electrically insulating material, such as ceramic. The insulation slots 123, 125 reduce or inhibit electrical current flow that may be induced by, e.g., an induction heater as described below.

As shown in FIGS. 3A-3B, the copper crucible 122 includes an inlet 126 and an outlet 128, and further defines an inner surface 129, and the copper nozzle 124 includes an inlet 130 and an outlet 132, and further defines an inner surface 133. The outlet 132 is defined at a downstream end 135 of the copper nozzle 124. The metal feedstock 108 is provided to the inlet 126 of the copper crucible 122, and the metal feedstock 108 melts into the molten metal 110. The molten metal 110 flows through the outlet 128 of the copper crucible 122 into the inlet 130 of the copper nozzle 124. The molten metal 110 then flows through the outlet 132 of the copper nozzle 124 and into the atomization chamber 106. The inlet 126 of the copper crucible 122 is larger than the outlet 132 of the copper nozzle 124, tapering to cause molten metal 110 to accumulate in the copper crucible 122. A layer of solidified metal 134 forms between the molten metal 110 and the copper crucible 122 and the copper nozzle 124 (on the inner surface 133 of the copper nozzle 124). The solidified metal 134 inhibits the molten metal 110 (which is heated to a temperature above the melting temperature of copper) from reaching (and melting) the copper crucible 122 and the copper nozzle 124.

The assembly 120 includes an induction heater 136 extending around the copper crucible 122 and the copper nozzle 124. The induction heater 136 includes a heating coil 138, a power source 140, and a controller 142 (FIG. 2). The heating coil 138 of the induction heater is configured to heat the metal feedstock 108 above a melting temperature of the metal upon receiving power from the power source 140. The controller 142 instructs the power source 140 to provide power to the heating coil 138. As described in greater detail below, the induction heater 136 heats the metal feedstock 108 to form the molten metal 110, which flows through the copper crucible 122 and the copper nozzle 124. As shown in FIG. 2, the heating coil 138 is contiguous and extends in a helical pattern from the copper crucible 122 to the copper nozzle 124, providing consistent heating throughout the assembly 120.

Referring again to FIG. 2, the heating coil 138 of the induction heater 136 is configured to heat the metal above a melting temperature of the metal. Specifically, the metal feedstock 108 includes titanium powder. The heating coil 138 of the induction heater 136 is actuated to pass alternating current from the power source 140 at a single frequency, which generates a magnetic field. The magnetic field induces eddy currents in the molten metal 110, which generates heat to maintain a specific viscosity of the molten metal 110. Specifically, the controller 142 actuates the power source 140 and the heating coil 138 to heat the molten metal 110 such that the molten metal 110 flows through the copper nozzle 124 at a flow rate that is within a threshold of a specified flow rate. The specified flow rate is determined to allow atomization of the molten metal 110 to provide particles of the metal powder at specific sizes, and the temperature to which the induction heater heats the molten metal 110 above the melting point. As an example, the specified flow rate may be less than or equal to 4.0 kg per minute.

The size of the particles of the metal powder 102 is primarily determined by the ratio of atomization gas mass flow rate to molten metal mass flow rate, i.e., a gas to metal ratio (GMR). The higher the gas mass flow rate for a given metal mass flow rate, the smaller the resulting powder size. Other factors, such as metal overheat, metal viscosity, atomization gas velocity, and nozzle geometry, also impact the size of the particles of the metal powder 102. The metal feedstock 108 may preferentially be preheated before entering the copper crucible 122, such as with an arc melter or an induction heater. The mixture of a preheated feedstock with a non-preheated feedstock allows for recycling of scrap, slag, and other waste metal products . The preheating of the metal feedstock 108 reduces the amount of energy that the induction heater 136 provides to the molten metal 110, improving overall energy efficiency.

As shown in FIGS. 3A-3B, the assembly 120 includes a cooling system 144 in thermal communication with the copper crucible 122 and the copper nozzle 124. The cooling system 144 may be a water cooling system configured to cool the copper crucible 122 and the copper nozzle 124 while the heating coil 138 heats the molten metal 110. Alternatively, other coolants may be used in the cooling system 144, such as oil, a refrigerant, or the like. The cooling system 144 includes a controller 146, a pump 148, a storage tank 150, and a heat exchanger 152. The controller 146 actuates the pump 148 to provide water from the storage tank 150 to the copper crucible 122 and the copper nozzle 124. The heat exchanger 152 cools heated water from the copper crucible 122 and the copper nozzle 124 and provides the cooled water to the storage tank 150. The heat from the heat exchanger 152 may be transferred to the environment or to a different and separate cooling system.

The cooling system 144 cools the copper crucible 122 and the copper nozzle 124. Specifically, the cooling system 144 is configured to flow water through a first cooling channel 154 of the copper crucible 122 and a second cooling channel 156 of the copper nozzle 124. The pump 148 provides water to the first and second cooling channels 154, 156, which cool the copper crucible 122 and the copper nozzle 124 such that all portions of the copper crucible 122 and the copper nozzle 124 are at a temperature below the melting temperature of copper (typically about 1100 degrees Celsius). In one form, an average temperature of the copper crucible 122 and the copper nozzle 124 is cooled to 400 degrees Celsius, a temperature at which substantially none of the copper crucible 122 or the copper nozzle 124 is above the melting temperature of copper. The cooling system 144 causes the copper crucible 122 and the copper nozzle 124 to remain solid while the induction heater heats the metal feedstock 108 to temperatures in excess of its melting point. As shown in FIG. 3B, the assembly 120 may include a second cooling system 144' including a second controller 146', a second pump 148', a second storage tank 150', and a second heat exchanger 152'. In such a form, the cooling system 144 may cool only the copper crucible 122, and the second cooling system 144' may cool only the copper nozzle 124. That is, the cooling systems 144, 144' may cool the copper crucible 122 and the copper nozzle 124 independently, allowing for specific temperature control of the assembly 120.

The assembly 120 includes an atomization fluid supply 158 disposed beneath the copper nozzle 124. The atomization fluid supply 158 may deliver a cold gas from a gas line, a hot gas from a gas heater, or a plasma from a plasma torch. It provides a stream of fluid through an outlet 160 that drives the molten metal 110 into the atomization chamber and breaks the stream of molten metal 110 into droplets 112 (FIG. 1) . The droplets 112 then solidify into the metal powder 102 (FIG. 1). The atomization fluid supply 158 may be a plasma torch or a gas torch, and the stream of fluid may be a flow of plasma (i.e., a fluid heated to the plasma state of matter) or a flow of heated gas. The fluid may be an inert gas, such as argon, helium, or a mixture of inert gases including other gases at low concentration, that inhibits reactivity of the molten metal 110.

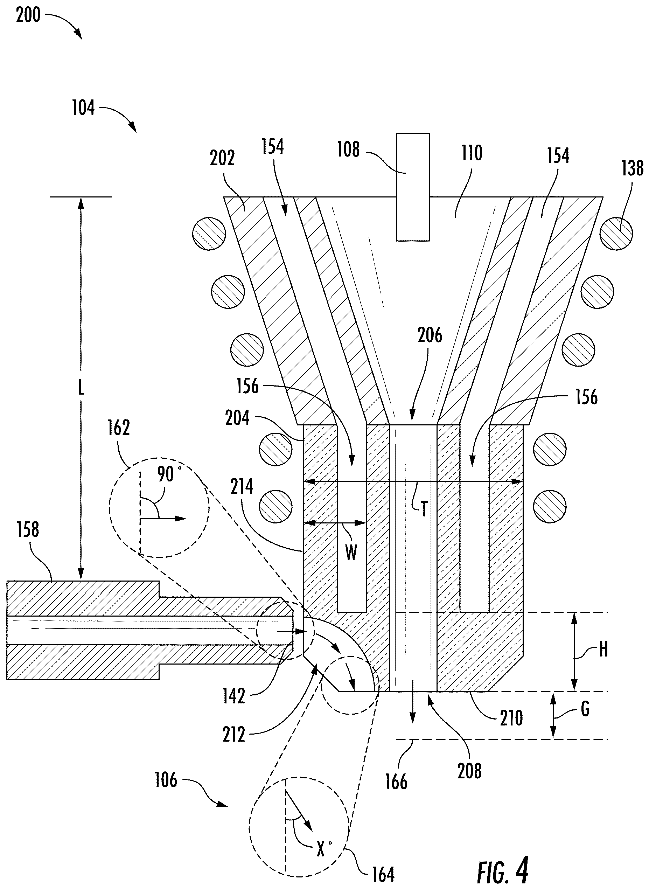

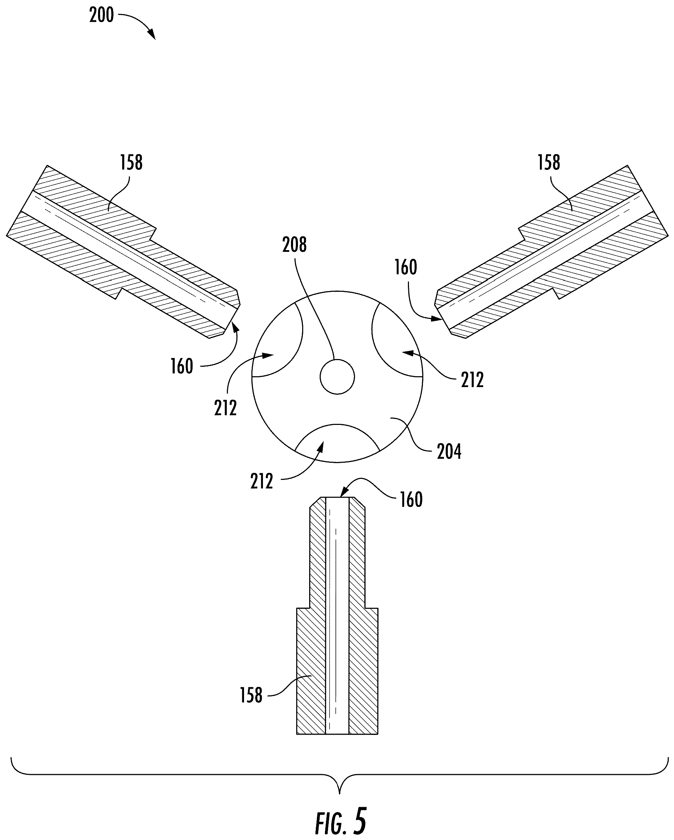

With reference to FIGS. 4-5, schematic views of another assembly 200 for melting metal feedstock 108. FIG. 4 shows a side cross-sectional view of the assembly 200. FIG. 5 shows a bottom-up view of the assembly 200. Common components between the assembly 120 and the assembly 200 are marked with a common numeral.

The assembly 200 includes a copper crucible 202 that holds the metal feedstock 108 while the metal feedstock 108 melts into a molten metal 110 and a copper nozzle 204 extending beneath the copper crucible 202. The copper nozzle 204 defines a thickness T, i.e., a diameter of the copper nozzle 204. The copper nozzle 204 directs the molten metal 110 to an atomization chamber 106. The copper nozzle 204 includes an inlet 206 and an outlet 208 defined in a bottom surface 210. The bottom surface 210 is defined at a downstream end 211 of the copper nozzle 204. Molten metal 110 from the copper crucible 202 flows into the inlet 206 of the copper nozzle 204 and out through the outlet 208 of the copper nozzle 204 into the atomization chamber 106.

The copper nozzle 204 defines a plurality of grooves 212 that each extend from a side surface 214 to the bottom surface 210. The copper nozzle 204 defines a width W from the side surface 214 to an inner surface of a second cooling channel 156. A plurality of atomization fluid supplies 158, such as plasma torches, gas torches, gas lines, manifolds, plenums, and the like, are arranged such that the outlet 160 of each of the plurality of atomization fluid supplies 158 is adjacent to one of the plurality of grooves 212. Such an arrangement may be referred to as a "close coupling" of the atomization fluid supplies 158 to the copper nozzle 204. Each atomization fluid supply 158 may be arranged a distance L from a top surface of the copper crucible 202. The plurality of grooves 212 allow an atomization gas, such as a respective stream from each of the atomization fluid supplies 158, to drive a stream of molten metal 110 from the outlet 208 of the copper nozzle 204 to the atomization chamber 106. As shown in FIG. 5, the plurality of grooves 212 may be evenly spaced around a circumference of the copper nozzle 204 such that the streams of atomization gas flow evenly around the stream of molten metal 110. While FIG. 5 shows three grooves 212, it will be appreciated that the copper nozzle 204 may include a different number of grooves 212, such as four, five, or six.

As shown in FIG. 5, the grooves 212 may define an arcuate shape starting from the side surface 214 to the bottom surface 210 and extending along a height H. More specifically, as shown in a cutaway 162, the outlet 160 of the atomization fluid supply 158 is arranged such that an entrance angle of flow of the atomization gas may be perpendicular to the side surface 214, forming a 90 degree angle. It will be appreciated that the entrance angle may be a different angle than a 90 degree angle. Atomization gas flows through the groove 212 past the side surface 214 down to the bottom surface 210, where the outflow of the atomization gas forms an exit angle of X degrees relative to a vertical axis, shown in a cutaway 164, where X is a specified angle determined based on a specified flow path of the atomization gas. The shape of the grooves 212 may be specified to optimize the shear force of atomization gas deployed onto the molten metal. The specified exit angle directs the atomization gas to draw the molten metal 110 through the copper nozzle 204 and into the atomization chamber 106. Specifically, the atomization gas and the molten metal 110 meet at a contact point 166 separated from the bottom surface 210 of the copper nozzle 204 by a gap G.

The assembly 200 includes a cooling system 144 and an induction heater 136. As described above, the induction heater 136 melts the metal feedstock 108 to the molten metal 110, and the cooling system 144 cools the copper crucible 202 and the copper nozzle 204 to maintain solidity of the copper crucible 202 and the copper nozzle 204. A heating coil 138 of the induction heater 136 may be actuated at a specific frequency to provide consistent melting of the metal feedstock 108. While not shown in FIG. 5, it will be appreciated that the assembly 200 may include a second cooling system, such as is shown in FIG. 3B, to separately cool the copper crucible 202 and the copper nozzle 204.

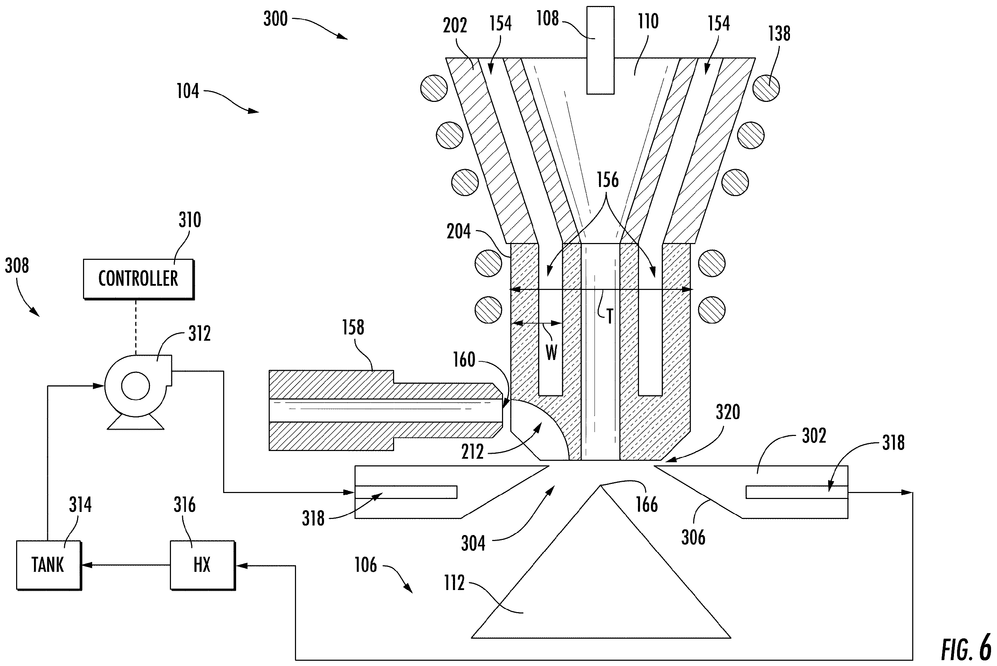

Now referring to FIG. 6, another assembly 300 for melting metal feedstock 108 is depicted. The assembly 300 includes components that are similar to those of the assembly 200, and common components will use a common numeral.

The assembly 300 includes a copper crucible 202, a copper nozzle 204 disposed beneath the copper crucible 202, and an annular plate 302 defining an aperture 304 disposed beneath the copper nozzle 204. The annular plate 302 is disposed in the melt chamber 104 adjacent to the atomization chamber 106 such that the aperture 304 is the only connection between the melt chamber 104 and the atomization chamber 106.

As shown in FIG. 6, the copper nozzle 204 and an atomization fluid supply 158 are disposed above the annular plate 302. The molten metal 110 flows through the copper nozzle 204, and the atomization fluid supply 158 flows a stream of gas or plasma from an outlet 160 along a groove 212 of the copper nozzle 204 to direct the molten metal 110 through the aperture 304. Because the annular plate 302 separates the melt chamber 104 from the atomization chamber 106, upon atomizing the molten metal 110 in the atomization chamber 106 with the stream from the atomization fluid supply 158, the annular plate 302 blocks at least some of the molten metal 110 from flowing upward back into the melt chamber 104. Blocking the upward flow of the molten metal 110 may reduce or inhibit contact between the hot molten metal 110 and components in the melt chamber 104 that may be damaged by the molten metal 110. The annular plate 302 thus helps to protect the components of the melt chamber 104 by preventing metal particles from flowing up from the atomization chamber 106. In particular, the annular plate 302 may include a tapered edge 306 that opens into the atomization chamber 106, causing the molten metal 110 to form a cone-shaped stream of droplets 112 into the atomization chamber 106. Additionally, the annular plate 302 helps to regulate the pressure differential between the melt chamber 104 and the atomization chamber 106.

The annular plate 302 includes a cooling system 308 to maintain solidity of the annular plate 302 while the molten metal 110 is heated. As with the cooling system 144 described above, the cooling system 308 includes a controller 310, a pump 312, a storage tank 314, and a heat exchanger 316. The controller 310 actuates the pump 312 to provide water from the storage tank 314 to a cooling channel 318 of the annular plate 302. The heat exchanger 316 cools heated water (or other coolants) from the cooling channel 318 and provides the cooled water to the storage tank 314.

The cooling system 308 may be actuated to maintain a temperature of the annular plate 302 below a specified temperature, as described above. The cooling system 308 of the annular plate 302 may be a separate system than the cooling system 144 of the copper crucible 202 and the copper nozzle 204. Alternatively, the cooling system 308 of the annular plate 302 may share one or more components with the cooling system 144 of the copper crucible 202 and the copper nozzle 204, such as sharing a common storage tank.

The copper nozzle 204 may be separated from the annular plate 302 by a gap 320, although a gap may not be necessary for certain embodiments. A size of the gap 320 is determined based on specified flow characteristics of the atomization gas and the molten metal 110. More specifically, the gap 320 may be sized such that the aperture 304 allows the atomization gas and the molten metal 110 to meet at a specified contact point 166, at which point droplets 112 of the molten metal 110 form.

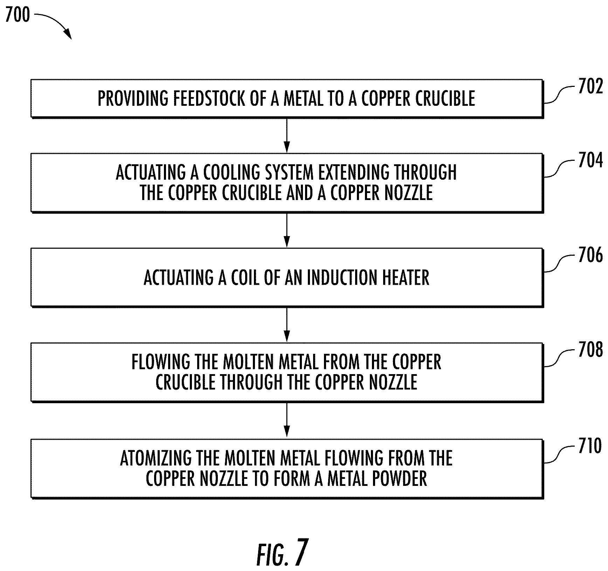

Referring now to FIG. 7, a flow diagram of a method 700 of melting a metal feedstock in accordance with an exemplary aspect of the present disclosure is provided. The method 700 of FIG. 7 may be utilized to operate one or more of the exemplary assemblies described above with reference to FIGS. 1 through 6. However, in other exemplary aspects, the method 700 may additionally or alternatively be utilized to operate any other suitable assembly for heating a metal.

As is depicted, the method 700 includes at (702) providing a feedstock of a metal to a copper crucible of the assembly. As described above, the feedstock may be a form of the metal that can melt in the copper crucible. The feedstock may include metal powder, metal shavings, metal wire, or combinations thereof. The metal may be aluminum, titanium, or alloys thereof.

The method 700 includes at (704) actuating a cooling system extending through the copper crucible and a copper nozzle disposed beneath the copper crucible. Because the metal feedstock is heated to temperatures beyond the melting point of copper, the copper crucible and the copper nozzle are cooled to maintain solidity. The cooling system may be a water cooling system that flows water to transfer heat away from the copper crucible and the copper nozzle.

The method 700 includes at (706) actuating a heating coil of an induction heater maintain a liquid state of a molten metal. The induction heater induces eddy currents in the molten metal that heat the feedstock beyond the melting point of the metal. The heating coil may be actuated at a specific frequency of alternating current to provide a specific electric field that induces the eddy currents. The heating coil extends around the copper crucible and the copper nozzle to maintain the molten metal in a liquid state.

The method 700 includes at (708) flowing the molten metal from the copper crucible through the copper nozzle. Because the molten metal is liquid, the molten metal forms a stream that flows downward out through an outlet of the copper nozzle. The heating coil maintains a specific temperature of the molten metal that causes the stream to flow at a specified flow rate.

The method 700 includes at (710) atomizing the molten metal flowing from the copper nozzle to form a metal powder. A fluid stream, such as a plasma stream or a gas stream, may break up the stream of molten metal to form droplets. The droplets solidify into the metal powder and descend to a powder containment vessel. An atomization fluid supply, such as a plasma torch, a gas torch, a gas line, or the like, may be arranged adjacent to the copper nozzle to atomize the molten metal.

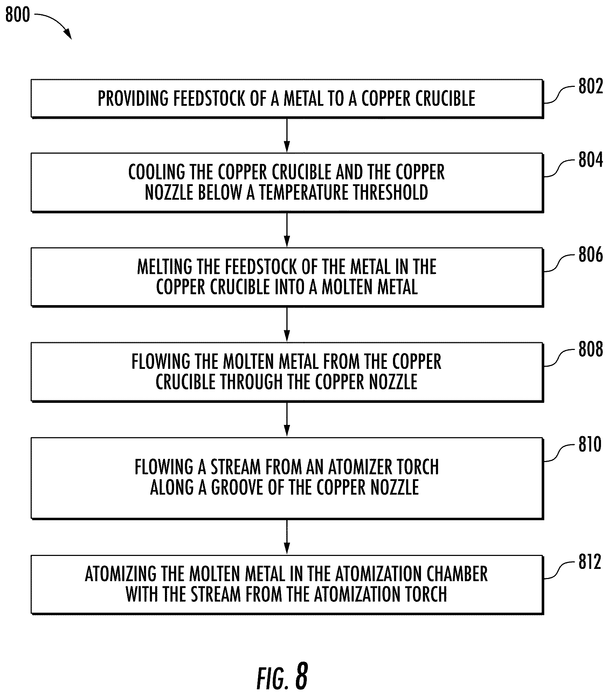

Referring now to FIG. 8, a flow diagram of a method 800 of melting a metal feedstock in accordance with an exemplary aspect of the present disclosure is provided. The method 800 of FIG. 8 may be utilized to operate one or more of the exemplary assemblies described above with reference to FIGS. 1 through 6. However, in other exemplary aspects, the method 800 may additionally or alternatively be utilized to operate any other suitable assembly for heating a metal.

The method 800 includes at (802) providing a feedstock of a metal to a copper crucible. As described above, the feedstock may be a form of the metal that can melt in the copper crucible. The feedstock may include metal powder, metal shavings, metal wire, or combinations thereof. The metal may be aluminum, titanium, or alloys thereof.

The method 800 includes at (804) cooling the copper crucible and the copper nozzle below a temperature threshold. Specifically, a cooling system flows water around the copper crucible and the copper nozzle to maintain a temperature of the copper crucible and the copper nozzle below the temperature threshold, thereby maintaining solidity of the assembly.

The method 800 includes at (806) melting the feedstock of the metal in the copper crucible into a molten metal. A heater, such as an induction coil, may increase the temperature of the feedstock beyond the melting point of the metal. It will be appreciated that steps (804) and (806) may be performed simultaneously such that the cooling system and the induction heater are actuated at substantially the same time.

The method 800 includes at (808) flowing the molten metal from the copper crucible through the copper nozzle. The induction heater heats the molten metal to a viscosity that allows for a specific flow rate.

The method 800 includes at (810) flowing a gas stream from an atomization fluid supply along a groove of the copper nozzle to atomize the molten metal descending into an atomization chamber. The stream may be a cold gas stream or a hot gas stream from a gas heater or a plasma torch. In particular, the gas stream hits the molten metal stream. Both the gas stream and the molten metal stream flow through an aperture of an annular plate disposed beneath the copper nozzle. The grooves determine the location of the angle of the collision between the molten metal stream and the atomization fluid stream. For the application of atomization, and in order to reduce or inhibit metal splashing, the atomization fluid supply is preferably delivered at a downward angle with respect to the axis of symmetry of the metal delivery channel in the nozzle.

The method 800 includes at (812) atomizing the molten metal in the atomization chamber. As the stream directs the molten metal into the atomization chamber, the stream breaks the molten metal into droplets. The droplets cool into solid particles and sink into a powder collecting vessel of the atomization chamber.

As alluded to earlier, the inventors discovered, unexpectedly during the course of designing atomization assemblies having a copper nozzle, in combination with an induction heater and a cooling system a significant relationship between the metal mass flowrate, the copper nozzle coolant mass flowrate, the maximum surface temperature of copper in contact with a solidified molten metal, and the maximum temperature of the molten metal through the outlet of the copper nozzle. The design process included, e.g., designing atomization assemblies having the above-noted structure with variations in the above-noted aspects (mass flowrates, and maximum temperatures), and evaluating an overall atomization system and powder characteristics. The relationship can be thought of as an indicator of the ability of an atomization system to be able to produce a metal powder (e.g., titanium or titanium alloy) of desirably fine powder sizes, optionally allowing for the use of recycled feedstock, all without overly contaminating the metal being atomized and consuming the main components of the atomization system. It will further be appreciated that this relationship can be thought of as an indicator of the ability of an atomization system to be able achieve these benefits without unnecessarily using up energy resources (electrical power to drive the induction heater and water or coolant for the cooling systems).

The relationship applies to an atomization assembly having a copper nozzle, in combination with an induction heater and a cooling system. The relationship ties together the metal mass flowrate, the copper nozzle coolant mass flowrate, the maximum surface temperature copper in direct contact with a solidified molten metal, and the maximum temperature of the molten metal through the outlet of the copper nozzle, as described in more detail below. It is important to note that this relationship applies for relatively small nozzles that are able to limit the metal mass flowrate in the metal powder atomization process, e.g., that are within an upper bound on its inner diameter (i.e., having a diameter at an outlet).

In particular, the inventors discovered that through inclusion of the induction heater and cooling system, in combination with the copper nozzle, allowed for design of an atomization system having a particular maximum temperature, *Tₘₑₜₐₗ,* of the metal through an outlet of the copper nozzle (e.g., through outlet 132 of copper nozzle 124 in FIGS. 3A-3B) and maximum temperature, *T_{surface},* of an inner surface in direct contact with a metal, such as of a copper surface in direct contact with a solidified molten metal (e.g., inner surface 133 of copper nozzle 124 in FIGS. 3A-3B).

The inventors found that the maximum temperature, *Tₘₑₜₐₗ,* of the metal through the outlet of the copper nozzle needs to be within a relatively narrow range to achieve the desired flow characteristics (e.g., sufficient flowability without excess solidification on the copper nozzle), and without affecting the composition of the metal. For example, when the metal is a titanium alloy containing aluminum, if the maximum temperature, *Tₘₑₜₐₗ,* exceeds an upper threshold, the aluminum may evaporate, affecting the composition of the titanium alloy.

Further, the inventors also found that the maximum temperature, *T_{surface},* of the surface the copper in direct contact with the solidified molten metal similarly needs to be within a relatively narrow range to not only maintain the copper nozzle in the solid state (given that the metal may be heated well above the melting temperature of copper), but also to reduce wear on the copper nozzle such that it is not "consumed" as part of the atomization process. Moreover, the inventors found that the copper nozzle can function in this manner without being cooled to an unnecessarily low temperature that may make the atomization process unproductive from an energy consumption standpoint.

Further, still, the inventors discovered that through inclusion of the induction heater and cooling system, in combination with the copper nozzle, the atomization system can be designed to provide the molten metal through an outlet of the copper nozzle (e.g., through outlet 132 of copper nozzle 124 in FIGS. 3A-3B) at a mass flowrate, *ṁₘₑₜₐₗ,* that may allow for atomization of the molten metal into a desirably small powder. Additionally, the atomization system can be designed with a cooling system capable of providing a cooling fluid at a mass flowrate, *ṁ_{coolant},* through the copper nozzle, and the copper nozzle can be designed to receive and circulate the cooling fluid at the mass flowrate, *ṁ_{coolant}* to enable the molten metal to be provided through the outlet of the copper nozzle at the mass flowrate, *ṁₘₑₜₐₗ,* while maintaining the maximum temperature, *Tₘₑₜₐₗ,* and maximum temperature, *T_{surface},* within desired ranges and without overly cooling the copper nozzle.

As will be appreciated, the mass flowrate, *ṁ_{coolant},* through the copper nozzle refers to a total mass flowrate of all the coolant provided to the copper nozzle at a particular time.

The relationship discovered, *infra,* can therefore identify an atomization assembly with an induction heater and a cooling system in combination with a copper nozzle, capable of achieving the desired benefits noted above while avoiding the pitfalls noted above, and suited for producing a powder having a desired particle size.

The desired relationship providing for the improved atomization system, discovered by the inventors, is an energy conversion factor (ECF), expressed as: $\frac{{T}_{metal}}{{T}_{surface}} \div \left(0.8+70 {{\dot{m}}_{coolant}}^{0.8}+\frac{5 {{\dot{m}}_{coolant}}^{0.8}}{0.2 + {{\dot{m}}_{metal}}^{0.8}}\right) ;$ where *Tₘₑₜₐₗ* is a maximum temperature in degrees Celsius of the molten metal flowing through an outlet of the copper nozzle during operation of the atomization assembly in a production mode; *T_{surface}* is a maximum temperature in degrees Celsius of the copper surface in contact with the solidified molten metal during operation of the atomization assembly in the production mode; *ṁₘₑₜₐₗ* is a mass flowrate in kilograms per second of the metal (e.g., molten metal) through the outlet of the copper nozzle during operation of the atomization assembly in the production mode; and *ṁ_{coolant}* is a mass flowrate in kilograms per second of a coolant provided through one or more cooling passages of the copper nozzle during operation of the atomization assembly in the production mode. It will be appreciated that the ECF is presented as a unit-less ratio, and as such, inherent in the ECF relationship there are unit canceling constants where needed to allow for the calculation of ECF with the temperatures being in degrees Celsius (°C) and the mass flow rates being in kilograms per second.

As will be appreciated, the term "production mode" refers to a steady state operating condition of the atomization assembly whereby the atomization assembly is producing metal powder at a rate greater than or equal to 70% of a maximum designed operating rate (in units of kilograms per second). The term "maximum designed operating rate" refers to an operating rate of the atomization assembly for a particular metal whereby the atomization assembly produces the most powder

Values for various parameters associated with the ECF are set forth below in TABLE 1:

| **TABLE 1** | | |
|---|---|---|
| **Symbol** | **Description** | **Ranges appropriate for using ECF** |
| ECF | Energy conversion factor | Greater than or equal to 1 % (0.01) and less than or equal to 30.0 % (0.30), such as greater than or equal to 5.0 % (0.05) and less than or equal to 20.0 % (0.20) |
| *Tₘₑₜₐₗ* | maximum temperature in degrees Celsius (°C) of the molten metal flowing through an outlet of the copper nozzle | Greater than or equal to 1650 °C and less than or equal to 2000 °C, such as greater than or equal to 1650 °C and less than or equal to 1900 °C |
| *T_{surface}* | maximum temperature in degrees Celsius (°C) of a copper surface in contact with the solidified molten metal | Greater than or equal to 15 °C and less than or equal to 400 °C, such as greater than or equal to 50 °C and less than or equal to 390 °C |
| *ṁₘₑₜₐₗ* | mass flowrate in kilograms per second (kg/sec) of the molten metal through the outlet of the copper nozzle | Greater than or equal to 0.0016 kg/sec and less than or equal to 0.067 kg/sec, such as greater than or equal to 0.0041 kg/sec and less than or equal to 0.034 kg/sec |
| *ṁ_{coolant}* | mass flowrate in kilograms per second (kg/sec) of a coolant provided through one or more cooling passages of the copper nozzle | Greater than or equal to 0.1 kg/sec and less than or equal to 8 kg/sec, such as greater than or equal to 0.18 kg/sec and less than or equal to 2.1 kg/sec |

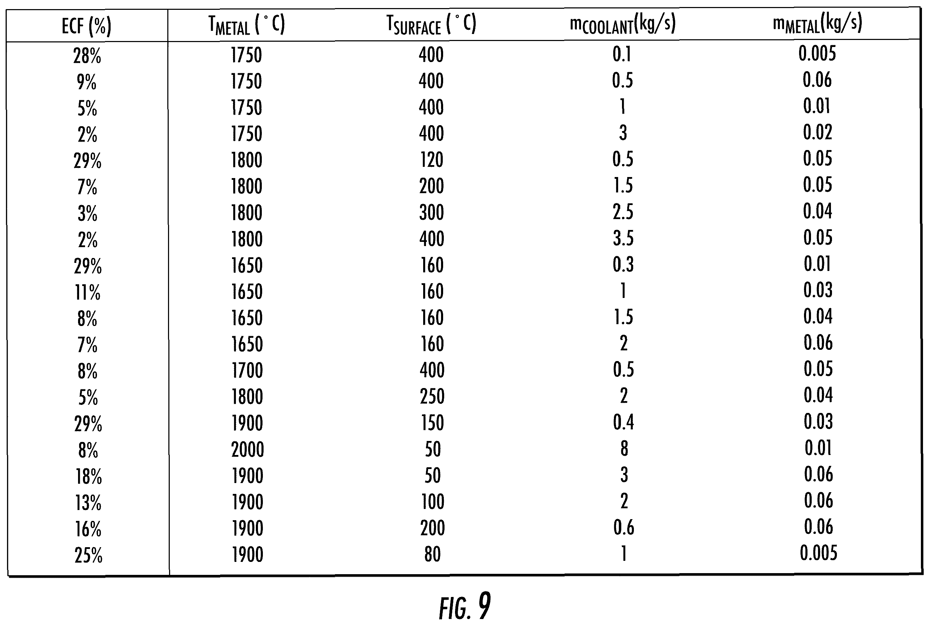

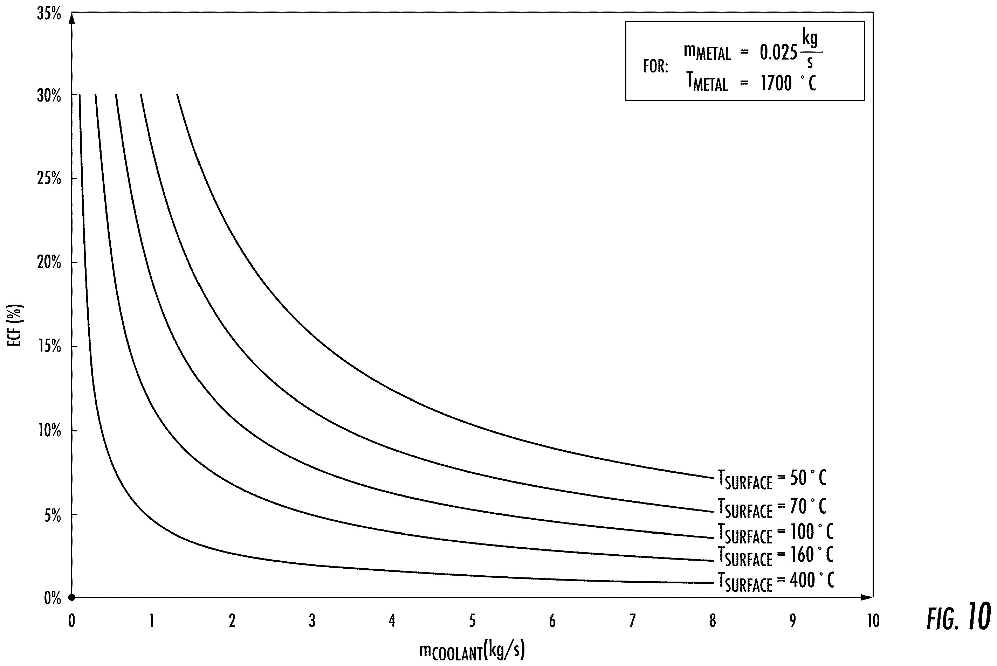

Referring now to FIGS. 9 and 10, the relationships between the various parameters of the ECF discussed hereinabove are illustrated in accordance with one or more exemplary embodiments of the present disclosure. In particular, FIG. 9 provides a table including numerical values corresponding to several of the plotted atomization assemblies in FIG. 10. FIG. 10 is a plot of atomization assemblies in accordance with one or more exemplary embodiments of the present disclosure, showing the ECF (Y-Axis) and the mass flowrate in kilograms per second (kg/sec) of a coolant provided through one or more cooling passages of the copper nozzle (X-axis). The plotted values in the chart in FIG. 10 include a variety of exemplary maximum temperatures of a copper surface in contact with the solidified molten metal, as is indicated by the lines labeled as such. Notably, as is also indicated in the chart of FIG. 10, the values assume a mass flowrate in kilograms per second (kg/sec) of the molten metal through the outlet of the copper nozzle of 0.025 kg/sec and a maximum temperature in degrees Celsius (C) of the molten metal flowing through an outlet of the copper nozzle of 1700 degrees C.

Although not indicated in FIGS. 9 and 10, as noted above, the relationship applies for relatively small nozzles that are able to limit the metal mass flowrate in the metal powder atomization process, e.g., that are within an upper bound on its inner diameter (i.e., having a diameter at an outlet). In some embodiments, the upper bound on the inner diameter of the metal outlet of the copper nozzle may be 0.750 inches, such that the metal outlet of the copper nozzle defines an inner diameter less than or equal to 0.750 inches.

Moreover, it will be appreciated that the above relationship is valid for a variety of different atomization assemblies, having a variety of different operating parameters and configurations. In one example embodiments, the atomization assembly can have a total plasma torch power of 100 kilowatts (kW); a total induction power (e.g., for induction heater 136) of 250 kW; a mass flowrate of 3 kilograms per second (kg/sec) of a coolant provided through one or more cooling passages of the copper nozzle; a mass flowrate of 0.017 kilograms per second (kg/sec) of the molten metal through the outlet of the copper nozzle; a pouring metal feed rate equal to the mass flowrate of the molten metal through the outlet of the copper nozzle (0.017 kg/sec); and a pressure differential between a melt chamber and a reaction chamber of the atomization assembly of 100 mbar. Such an arrangement can provide a powder having particle sizes with a median D50 equal to 51 microns when atomizing a titanium or titanium alloy.

It will further be appreciated that the present disclosure further provides for a method of atomizing a metal. The method may utilize one or more of the exemplary atomization assemblies described hereinabove, or may utilize any other suitable atomization assembly.

In one exemplary aspect, the method includes operating an atomization assembly in a production mode. Operating the atomization assembly in the production mode may include providing the metal to a crucible, through the crucible to a copper nozzle, through the copper nozzle to a metal outlet of the copper nozzle (e.g., outlet 132 in the embodiment of FIGS. 3A-3B), and through the metal outlet at a mass flowrate, *ṁₘₑₜₐₗ* kilograms per second (kg/sec). In certain exemplary aspects, the metal may be a titanium or a titanium alloy.

The method may further include cooling the copper nozzle with a cooling system while operating the atomization assembly in the production mode. Cooling the copper nozzle may include providing a flow of cooling fluid through one or more cooling passages of the copper nozzle at a mass flowrate, *ṁ_{coolant}.*

For the above exemplary aspect, while operating the atomization assembly in the production mode, the copper nozzle defines a maximum temperature, *T_{surface};* the metal through the metal outlet define a maximum temperature, *T*_{*metal*;} and the atomization assembly defines an energy conversion factor (ECF) greater than or equal to 1.4 % (0.014) and less than or equal to 25.0 % (0.25), ECF equal to: $\frac{{T}_{metal}}{{T}_{surface}} \div \left(0.8+70 {{\dot{m}}_{coolant}}^{0.8}+\frac{5 {\left({\dot{m}}_{coolant}\right)}^{0.8}}{0.2 + {\left({\dot{m}}_{metal}\right)}^{0.8}}\right)$

In certain exemplary aspects, the method may further include heating the metal with an induction heater arranged around the crucible, the copper nozzle, or both while operating the atomization assembly in the production mode.

Further aspects are provided by the subject matter of the following clauses:
An atomization assembly for heating a metal includes a copper crucible arranged to hold the metal, a copper nozzle extending beneath the copper crucible, a heating coil extending around the copper crucible and the copper nozzle, and a cooling system in thermal communication with at least one of the copper crucible or the copper nozzle.

The assembly of any of the preceding clauses, wherein the copper crucible includes an inlet and an outlet, the copper nozzle includes an inlet and an outlet, and the outlet of the copper crucible is disposed above the inlet of the copper nozzle.

The assembly of any of the preceding clauses, further including an atomization fluid supply disposed adjacent to the outlet of the copper nozzle.

The assembly of any of the preceding clauses, wherein the atomization fluid supply is configured to deliver one of: a cold gas, a hot gas, or a plasma.

The assembly of any of the preceding clauses, wherein the inlet of the copper crucible is larger than the outlet of the copper nozzle.

The assembly of any of the preceding clauses, wherein the copper crucible defines a first cooling channel, wherein the copper nozzle defines a second cooling channel, and wherein the cooling system is a water cooling system including a pump, a tank, and a heat exchanger in fluid communication with at least one of the first cooling channel or the second cooling channel.

The assembly of any of the preceding clauses, wherein the first cooling channel and the second cooling channel are in fluid communication with each other.

The assembly of any of the preceding clauses, wherein the first cooling channel is in fluid communication with the cooling system and the second cooling channel is in fluid communication with a second cooling system.

The assembly of any of the preceding clauses, wherein the heating coil is configured to heat the metal above a melting temperature of the metal.

The assembly of any of the preceding clauses, wherein the heating coil is contiguous and extends in a helical pattern from the copper crucible to the copper nozzle.

A method for heating a metal for atomization includes providing feedstock of a metal to a copper crucible, actuating a cooling system extending in thermal communication with the copper crucible and a copper nozzle disposed beneath the copper crucible, actuating a heating coil to melt the feedstock of the metal in the copper crucible into a molten metal, and flowing the molten metal from the copper crucible through the copper nozzle.

The method of any of the preceding clauses, further including cooling the copper crucible and the copper nozzle with the cooling system to a temperature below 400 degrees Celsius.

The method of any of the preceding clauses, further including cooling the copper crucible and the copper nozzle with the cooling system to a temperature below 400 degrees Celsius, heating the metal in the copper crucible and copper nozzle with the coil to a temperature above a melting temperature of the metal, wherein the metal is a titanium or a titanium alloy, and flowing the metal in the copper crucible and copper nozzle through an outlet of the copper nozzle at a flowrate less than or equal to 4.0 kg per minute.

The method of any of the preceding clauses, further including actuating the heating coil at a single frequency.

The method of any of the preceding clauses, further including atomizing the molten metal flowing from the copper nozzle to form a metal powder.

The method of any of the preceding clauses, wherein the heating coil is contiguous and extends around the copper crucible and the copper nozzle.

The method of any of the preceding clauses, further including heating the molten metal with the heating coil such that a flow rate of the molten metal out from the copper nozzle is within a threshold of a specified flow rate.

The method of any of the preceding clauses, further including flowing plasma from an atomization fluid supply to the molten metal to atomize the molten metal.

The method of any of the preceding clauses, further including flowing water through the cooling system to cool the copper crucible and the copper nozzle.

The method of any of the preceding clauses, wherein the metal is titanium or a titanium alloy.

An atomization assembly for heating a metal, the assembly including a copper crucible arranged to hold the metal, a copper nozzle extending beneath the copper crucible, an annular plate defining an aperture, the aperture disposed beneath the copper nozzle, a cooling system in thermal communication with the annular plate; and an atomization fluid supply oriented to flow an atomization gas to direct the metal into the aperture.

The assembly of any of the preceding clauses, further including an atomization chamber and a melt chamber disposed above the atomization chamber, wherein the annular plate is disposed in the melt chamber adjacent to the atomization chamber.

The assembly of any of the preceding clauses, wherein the copper crucible, the copper nozzle, and the atomization fluid supply are disposed in the melt chamber.

The assembly of any of the preceding clauses, wherein a gas pressure in the melt chamber is greater than a gas pressure in the atomization chamber.

The assembly of any of the preceding clauses, wherein the copper nozzle includes a bottom surface that defines an outlet through which the metal flows, a side surface, and a groove extending from the side surface to the bottom surface.

The assembly of any of the preceding clauses, wherein the copper nozzle defines a plurality of grooves extending to the bottom surface, the plurality of grooves including the groove, the plurality of grooves evenly spaced around a circumference of the copper nozzle.

The assembly of any of the preceding clauses, further including a plurality of atomization fluid supplies, each of the plurality of atomization fluid supplies disposed adjacent to one of the plurality of grooves.

The assembly of any of the preceding clauses, wherein the outlet of the copper nozzle is spaced from the aperture of the annular plate by a gap.

The assembly of any of the preceding clauses, further including a heating coil disposed around the copper crucible and the copper nozzle.

The assembly of any of the preceding clauses, wherein the annular plate is copper.

The assembly of any of the preceding clauses, wherein the annular plate defines a cooling channel, and wherein the cooling system is a cooling system including a pump, a storage tank, and a heat exchanger in fluid communication with the cooling channel.

The assembly of any of the preceding clauses, further including a cooling system in thermal communication with the copper nozzle, wherein the atomization fluid supply is a plasma torch and the atomization gas is a plasma atomization gas.

A method for atomizing a metal, the method including flowing molten metal from a copper crucible through a copper nozzle and through an outlet defined by the copper nozzle, and flowing a stream from an atomization fluid supply to direct the molten metal from the outlet through an aperture of an annular plate from a melt chamber into an atomization chamber.

The method of any of the preceding clauses, wherein the annular plate separates the melt chamber from the atomization chamber, and the method further includes atomizing the molten metal in the atomization chamber with the stream from the atomization fluid supply.

The method of any of the preceding clauses, wherein the annular plate blocks at least some of the atomized molten metal from flowing into the melt chamber.

The method of any of the preceding clauses, further including flowing the stream from the atomization fluid supply to provide a specific flow rate of the molten metal out from the copper nozzle.

The method of any of the preceding clauses, further including actuating a heating coil of an induction heater disposed around the copper crucible and the copper nozzle to melt feedstock of a metal into the molten metal.

The method of any of the preceding clauses, further including cooling the annular plate with a cooling system.

The method of any of the preceding clauses, wherein cooling the annular plate further includes flowing water from a pump to a cooling channel defined in the annular plate.

The method of any of the preceding clauses, wherein the stream from the atomization fluid supply is a plasma stream.

An atomization assembly for heating a metal, the assembly including a copper crucible arranged to hold the metal, a copper nozzle extending beneath the copper crucible , the copper nozzle defining a side surface, an outer surface, and a groove extending from the side surface to the outer surface at the downstream end, a cooling system in thermal communication with the copper crucible and the copper nozzle, and an atomization fluid supply including an outlet disposed adjacent to the groove.

The assembly of any of the preceding clauses, further including an atomization chamber and a melt chamber, wherein the melt chamber is disposed above the atomization chamber.

The assembly of any of the preceding clauses, wherein the copper crucible, the copper nozzle, and the atomization fluid supply are disposed in the melt chamber.

The assembly of any of the preceding clauses, wherein a gas pressure in the melt chamber is greater than a gas pressure in the atomization chamber

The assembly of any of the preceding clauses, wherein the copper nozzle includes a bottom surface that defines an outlet through which the metal flows, and wherein the groove extends to the bottom surface.

The assembly of any of the preceding clauses, wherein the copper nozzle defines a plurality of grooves extending to the bottom surface, the plurality of grooves evenly spaced around a circumference of the copper nozzle.

The assembly of any of the preceding clauses, further including a heating coil extending around the copper crucible and the copper nozzle.

The assembly of any of the preceding clauses, wherein the coil is contiguous.

The assembly of any of the preceding clauses, wherein the cooling system is a water cooling system.

The assembly of any of the preceding clauses, wherein the atomization fluid supply is a plasma torch.

A method for atomizing a metal, the method including providing feedstock of a metal to a copper crucible, cooling the copper crucible and a copper nozzle below a temperature threshold, flowing a molten metal formed from the feedstock from the copper crucible through a copper nozzle and through an outlet defined by the copper nozzle, and flowing a stream from an atomization fluid supply along a groove of the copper nozzle to direct the molten metal downward.

The method of any of the preceding clauses, further including atomizing the molten metal in an atomization chamber with the stream from the atomization fluid supply.

The method of any of the preceding clauses, further including heating the molten metal to provide a specific flow rate of the molten metal out from the copper nozzle.

The method of any of the preceding clauses, wherein cooling the copper crucible and the copper nozzle further includes actuating a cooling system.

The method of any of the preceding clauses, wherein melting the feedstock of the metal further includes actuating an induction heater disposed around the copper crucible and the copper nozzle.

The method of any of the preceding clauses, further including flowing a respective stream from each of a plurality of atomization fluid supplies along a respective one of a plurality of grooves of the copper nozzle.

The method of any of the preceding clauses, wherein the groove directs the stream from the atomization fluid supply to a contact point with the molten metal.

The method of any of the preceding clauses, further including atomizing the molten metal into droplets and forming a metal powder from the droplets.

The method of any of the preceding clauses, wherein the metal is titanium.

The method of any of the preceding clauses, wherein the stream from the atomization fluid supply is a plasma stream.

An atomization assembly including a crucible configured to receive a metal, the metal being a titanium or a titanium alloy, a copper nozzle extending beneath the crucible configured to receive the metal from the copper crucible, the copper nozzle defining one or more cooling passages, an inner surface, and a metal outlet, and a cooling system in fluid communication with the one or more cooling passages of the copper nozzle for providing a flow of cooling fluid through the one or more cooling passages at a mass flowrate, *ṁ_{coolant},* during operation of the atomization assembly in a production mode, wherein, during operation of the atomization assembly in the production mode: the cooper nozzle defines a maximum temperature, *T_{surface},* of the inner surface in direct contact with the metal, and a mass flowrate, *ṁₘₑₜₐₗ,* of the metal through the metal outlet, the metal through the metal outlet defining a maximum temperature, *Tₘₑₜₐₗ*; and the atomization assembly defines an energy conversion factor (ECF) greater than or equal to 1 % (0.01) and less than or equal to 30 % (0.30), ECF equal to: $\frac{{T}_{metal}}{{T}_{surface}} \div \left(0.8+70 {\dot{m}}_{coolant}^{0.8}+\frac{5 {\dot{m}}_{coolant}^{0.8}}{0.2 + {\dot{m}}_{metal}^{0.8}}\right) .$

The atomization assembly of any of the preceding clauses, wherein the maximum temperature, *T_{surface},* is greater than or equal to 15 degrees Celsius and less than or equal to 400 degrees Celsius, and wherein during operation of the atomization assembly in the production mode, the metal includes a layer of solidified metal directly on the inner surface of the copper nozzle.

The atomization assembly of any of the preceding clauses, wherein the maximum temperature, *T_{metal,}* is greater than or equal to 1,650 degrees Celsius and less than or equal to 2,000 degrees Celsius.

The atomization assembly of any of the preceding clauses, wherein the mass flowrate, *ṁₘₑₜₐₗ,* of the metal through the metal outlet is greater than or equal to 0.0016 kilograms per second (kg/sec) and less than or equal to 0.067 kg/sec, and wherein the metal outlet of the copper nozzle defines an inner diameter less than or equal to 0.750 inches.

The atomization assembly of any of the preceding clauses, wherein the mass flowrate, *ṁ_{coolant},* of the cooling fluid through the one or more cooling passages is greater than or equal to 0.1 kilograms per second (kg/sec) and less than or equal to 8 kg/sec.

The atomization assembly of any of the preceding clauses, wherein the maximum temperature, *T_{surface},* is greater than or equal to 15 degrees Celsius and less than or equal to 400 degrees Celsius; the maximum temperature, *Tₘₑₜₐₗ,* is greater than or equal to 1,650 degrees Celsius and less than or equal to 2,000 degrees Celsius; the mass flowrate, *ṁₘₑₜₐₗ,* of the metal through the metal outlet is greater than or equal to 0.1/60 kilograms per second (kg/sec) and less than or equal to 4.0/60 kg/sec, and the mass flowrate, *ṁ_{coolant},* of the cooling fluid through the one or more cooling passages is greater than or equal to 0.1 kilograms per second (kg/sec) and less than or equal to 8 kg/sec.

The atomization assembly of any of the preceding clauses, wherein the maximum temperature, *T_{surface},* is greater than or equal to 50 degrees Celsius and less than or equal to 390 degrees Celsius; the maximum temperature, *Tₘₑₜₐₗ,* is greater than or equal to 1,650 degrees Celsius and less than or equal to 1900 degrees Celsius; the mass flowrate, *ṁₘₑₜₐₗ,* of the metal through the metal outlet is greater than or equal to 0.0041 kilograms per second (kg/sec) and less than or equal to 0.034 kg/sec; and the mass flowrate, *ṁ_{coolant},* of the cooling fluid through the one or more cooling passages is greater than or equal to 0.18 kilograms per second (kg/sec) and less than or equal to 2.1 kg/sec.

The atomization assembly of any of the preceding clauses, further including an induction heater arranged around the crucible, the copper nozzle, or both to control a temperature of the metal in the crucible, the copper nozzle, or both during operation of the atomization assembly in the production mode.

The atomization assembly of any of the preceding clauses, wherein the metal is a titanium alloy.

The atomization assembly of any of the preceding clauses, wherein the crucible is a copper crucible.

A method of atomizing a metal, the method including operating an atomization assembly in a production mode, wherein operating the atomization assembly in the production mode includes providing the metal to a crucible, through the crucible to a copper nozzle, through the copper nozzle to a metal outlet of the copper nozzle, and through the metal outlet at a mass flowrate, *ṁₘₑₜₐₗ,* kilograms per second (kg/sec), wherein the metal is a titanium or a titanium alloy; and cooling the copper nozzle with a cooling system while operating the atomization assembly in the production mode, wherein cooling the copper nozzle includes providing a flow of cooling fluid through one or more cooling passages of the copper nozzle at a mass flowrate, *ṁ_{coolant},* wherein, while operating the atomization assembly in the production mode, the copper nozzle defines a maximum temperature, *T_{surface},* of a copper surface in direct contact with the metal, the metal through the metal outlet define a maximum temperature, *Tₘₑₜₐₗ,* and the atomization assembly defines an energy conversion factor (ECF) greater than or equal to 1% (0.01) and less than or equal to 30.0 % (0.30), ECF equal to: $\frac{{T}_{metal}}{{T}_{surface}} \div \left(0.8+70 {\dot{m}}_{coolant}^{0.8}+\frac{5 {\dot{m}}_{coolant}^{0.8}}{0.2 + {\dot{m}}_{metal}^{0.8}}\right) .$

The method of any of the preceding clauses, further including heating the metal with an induction heater arranged around the crucible, the copper nozzle, or both while operating the atomization assembly in the production mode.

The method of any of the preceding clauses, wherein the maximum temperature, *T_{surface},* is greater than or equal to 15 degrees Celsius and less than or equal to 400 degrees Celsius.

The method of any of the preceding clauses, wherein the maximum temperature, *Tₘₑₜₐₗ,* is greater than or equal to 1,650 degrees Celsius and less than or equal to 2,000 degrees Celsius.

The method of any of the preceding clauses, wherein the mass flowrate, *ṁₘₑₜₐₗ* of the metal through the metal outlet is greater than or equal to 0.0016 kilograms per second (kg/sec) and less than or equal to 0.067 kilograms per second (kg/sec).

The method of any of the preceding clauses, wherein the mass flowrate, *ṁ_{coolant},* of the cooling fluid through the one or more cooling passages is greater than or equal to 0.1 kilograms per second (kg/sec) and less than or equal to 8 kilograms per second (kg/sec).

The method of any of the preceding clauses, wherein the maximum temperature, *T_{surface},* is greater than or equal to 15 degrees Celsius and less than or equal to 400 degrees Celsius; the maximum temperature, *Tₘₑₜₐₗ,* is greater than or equal to 1,650 degrees Celsius and less than or equal to 2,000 degrees Celsius; the mass flowrate, *ṁₘₑₜₐₗ,* of the metal through the metal outlet is greater than or equal to 0.1/60 kilograms per second (kg/sec) and less than or equal to 4.0/60 kg/sec,; and the mass flowrate, *ṁ_{coolant},* of the cooling fluid through the one or more cooling passages is greater than or equal to 0.1 kilograms per second (kg/sec) and less than or equal to 8 kg/sec.

The method of any of the preceding clauses, wherein the maximum temperature, *T_{surface},* is greater than or equal to 50 degrees Celsius and less than or equal to 390 degrees Celsius; the maximum temperature, *T_{metal,}* is greater than or equal to 1,650 degrees Celsius and less than or equal to 1900 degrees Celsius; the mass flowrate, *ṁₘₑₜₐₗ,* of the metal through the metal outlet is greater than or equal to 0.25/60 kilograms per sec (kg/sec) and less than or equal to 2.0/60 kg/sec,; and the mass flowrate, *ṁ_{coolant},* of the cooling fluid through the one or more cooling passages is greater than or equal to 0.18 kilograms per second (kg/sec) and less than or equal to 2.1 kg/sec.

The method of any of the preceding clauses, wherein the crucible is a copper crucible.

The method of any of the preceding clauses, the metal includes a layer of solidified metal directly on the inner surface of the copper nozzle.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An atomization assembly (120, 200, 300) for heating a metal, the assembly (120, 200, 300) comprising:
a copper crucible (122, 202) arranged to hold the metal;
a copper nozzle (124, 204) extending beneath the copper crucible (122, 202), the copper nozzle (124, 204) defining a downstream end and an outer surface;
an annular plate (302) defining an aperture (304), the aperture (304) disposed beneath the copper nozzle (124, 204);
a cooling system (144, 308) in thermal communication with the annular plate (302); and
an atomization fluid supply (158) oriented to direct an atomization gas into the aperture (304).

2. The assembly (120, 200, 300) of any of the preceding claims, further comprising an atomization chamber (106) and a melt chamber disposed above the atomization chamber (106), wherein the annular plate (302) is disposed in the melt chamber adjacent to the atomization chamber (106).

3. The assembly (120, 200, 300) of any of the preceding claims, wherein the copper crucible (122, 202), the copper nozzle (124, 204), and the plasma torch are disposed in the melt chamber.

4. The assembly (120, 200, 300) of any of the preceding claims, wherein a gas pressure in the melt chamber is greater than a gas pressure in the atomization chamber (106).

5. The assembly (120, 200, 300) of any of the preceding claims, wherein the copper nozzle (124, 204) includes a bottom surface (210) that defines an outlet (128, 132, 160, 208) through which the metal flows, a side surface (214), and a groove (212) extending from the side surface (214) to the bottom surface (210).

6. The assembly (120, 200, 300) of any of the preceding claims, wherein the copper nozzle (124, 204) defines a plurality of grooves (212) extending to the bottom surface (210), the plurality of grooves (212) including the groove (212), the plurality of grooves (212) evenly spaced around a circumference of the copper nozzle (124, 204).

7. The assembly (120, 200, 300) of any of the preceding claims, further comprising a plurality of atomization fluid supplies (158), each of the plurality of atomization fluid supplies (158) disposed adjacent to one of the plurality of grooves (212).

8. The assembly (120, 200, 300) of any of the preceding claims, wherein the annular plate (302) defines a cooling channel (156, 318), and wherein the cooling system (144, 308) is a cooling system (144, 308) including a pump (148, 312), a tank (150), and a heat exchanger (152, 316) in fluid communication with the cooling channel (156, 318).

9. The assembly (120, 200, 300) of any of the preceding claims, further comprising:
a cooling system (144, 308) in thermal communication with the downstream end of the copper nozzle (124, 204), wherein the atomization fluid supply (158) is a plasma torch and the atomization gas is a plasma atomization gas.

10. A method (700, 800) for atomizing a metal, the method (700, 800) comprising:
flowing molten metal (110) from a copper crucible (122, 202) through a copper nozzle (124, 204) and through an outlet (128, 132, 160, 208) defined by the copper nozzle (124, 204) at a downstream end; and
flowing a stream from an atomization fluid supply (158) to direct the molten metal (110) through an aperture (304) of an annular plate (302) from a melt chamber into an atomization chamber (106).

11. The method (700, 800) of any of the preceding claims, wherein the annular plate (302) separates the melt chamber from the atomization chamber (106), and the method (700, 800) further comprises atomizing the molten metal (110) in the atomization chamber (106) with the stream from the atomization fluid supply (158).

12. The method (700, 800) of any of the preceding claims, further comprising flowing the stream from the atomization fluid supply (158) to provide a specific flow rate of the molten metal (110) out from the copper nozzle (124, 204).

13. The method (700, 800) of any of the preceding claims, further comprising actuating a coil of an induction heater (136) disposed around the copper crucible (122, 202) and the copper nozzle (124, 204) to melt feedstock of a metal into the molten metal (110).

14. The method (700, 800) of any of the preceding claims, further comprising cooling the annular plate (302) with a cooling system (144, 308).

15. The method (700, 800) of any of the preceding claims, wherein cooling the annular plate (302) further comprises flowing water from a pump (148, 312) to a cooling channel (156, 318) defined in the annular plate (302).
